# EUROPEAN PATENT APPLICATION

(11) **EP 4 528 892 A1**
(43) Date of publication of application: **26.03.2025**
(21) Application number: 24202156.6
(22) Date of filing: 24.09.2024
(51) Int. Cl.: H01M 50/107, H01M 50/152, H01M 50/474, H01M 50/477, H01M 50/486, H01M 50/593

(54) **RECHARGEABLE BATTERY INCLUDING AN INSULATOR**

(30) Priority: 25.09.2023 KR 20230128596
(71) Applicant: Samsung SDI Co., Ltd., Gyeonggi-do 17084 (KR)
(72) Inventor: Lee, Wonik, Yongin-si, Gyeonggi-do 17084 (KR); Kim, Dae Kyu, Yongin-si, Gyeonggi-do 17084 (KR)
(74) Representative: Gulde & Partner

(57) **Abstract**

An insulator for a rechargeable battery is disclosed. The insulator may include: a first insulator including a plurality of first through holes; and a second insulator including a plurality of second through holes. A connection portion between a first one of the plurality of second through holes and an adjacent second one of the plurality of second through holes overlaps the first through hole.

## Description

### BACKGROUND

### 1. Field

The present disclosure relates to rechargeable batteries, and more particularly, to a rechargeable battery including an insulator.

### 2. Description of the Related Art

Demand for a rechargeable battery as an energy source is increasing according to technology development and demand for a mobile device.

An electrode assembly with a jelly roll shape may be formed by winding an electrode with a band shape, and an insulator may be included to minimize or prevent a short circuit between a cap plate and the electrode assembly or damage to the electrode assembly.

The insulator is inserted by cutting a plastic sheet into a circular or quadrangular shape depending on a shape of a case. A plurality of through holes may be formed in the insulator so that an electrolyte may be injected. If there is no through hole, a penetration path of the electrolyte may be blocked which may lengthen the time it takes to inject the electrolyte. Thus, productivity may be reduced.

If the electrolyte is injected using the through holes, a conductive foreign material particle such as a metal particle within the electrode assembly may float in the electrolyte to cause a small short circuit. Because the small short circuit occurs inside the battery, repairing the small short circuit may not be easy.

### SUMMARY

Embodiments of the present disclosure provide a rechargeable battery having an improved safety by effectively reducing the chance of a small short circuit by removing a conductive foreign material included in an electrolyte when the electrolyte is injected into the rechargeable battery.

An insulator for a rechargeable battery according to embodiments of the present disclosure includes: a first insulator including a plurality of first through holes and a connection portion between a first one of the plurality of first through holes and an adjacent second one of the plurality of first through holes; and a second insulator including a plurality of second through holes and a connection portion between a first one of the plurality of second through holes and an adjacent second one of the plurality of second through holes. The first insulator and second insulator are stacked such that a connection portion between a first one of the plurality of second through holes and an adjacent second one of the plurality of second through holes overlaps a corresponding one of the first through holes. The meaning of the term "corresponding" may refer to the drawings below. For example, when the first insulator and second insulator are stacked, the corresponding one of the first through holes may be the closest one to the connection portion.

At least one of the first insulator or the second insulator may have a plate shape.

The first insulator may have a plate shape, and the second insulator may have a net shape.

At least one of the plurality of first through holes or the plurality of second through holes may be arranged in a matrix format.

One or more of the plurality of first through holes may have one of a circular shape, an oval shape, or a polygonal shape.

At least one of the first insulator or the second insulator may include polypropylene (PP) or polyethylene terephthalate (PET).

A diameter of one or more of the plurality of first through holes and the one or more of the plurality of second through holes may be 100 µm or more.

An area of the plurality of first through holes may be 40% to 90% of an area of the first insulator.

A thickness of at least one of the first insulator and the second insulator may be 3 µm to 1,000 µm.

The first insulator and second insulator may be stacked such that a connection portion between a first one of the plurality of first through holes and an adjacent second one of the plurality of first through holes overlaps a corresponding one of the plurality of the second through holes.

A width of the connection portion between a first one of the plurality of first through holes and an adjacent second one of the plurality of first through holes may be smaller than a size of the second through hole overlapping the connection portion, and a width of the connection portion between a first one of the plurality of second through holes and an adjacent second one of the plurality of second through holes may be smaller than a size of the connection portion overlapping the second through hole between the first through holes.

A rechargeable battery according to embodiments of the present disclosure includes: the insulator according to various embodiments of the present disclosure; an electrode assembly arranged to overlap the insulator; a case that accommodates the insulator and the electrode assembly together with the electrolyte; and a cap plate configured to seal the case.

If a plurality of insulators that includes an insulator having a through hole larger than a size of an impurity are stacked as in embodiments of the present disclosure, the insulator having a fine hole with an identified or a desired size may be formed.

Embodiments of the present disclosure may allow removal of an impurity having an identified or a desired size while reducing a manufacturing process of the insulator, so that a rechargeable battery with improved stability minimizes or prevents occurrence of a small short circuit or the like.

### BRIEF DESCRIPTION OF THE DRAWINGS

FIG. 1 is a cross-sectional view of a rechargeable battery according to embodiments of the present disclosure.
FIG. 2 is a schematic plan view of an insulator according to embodiments of the present disclosure.
FIG. 3 is another view of the insulator of FIG. 2 according to embodiments of the present disclosure.
FIG. 4 is a plan view of a first insulator according to embodiments of the present disclosure.
FIG. 5 is a series of plan views of an insulator as it undergoes a stacking process according to embodiments of the present disclosure.
FIG. 6 is a plan view of an insulator according to embodiments of the present disclosure.
FIG. 7 is a plan view of an insulator according to embodiments of the present disclosure.

### DETAILED DESCRIPTION

Embodiments of the present disclosure will be described more fully hereinafter with reference to the accompanying drawings so that those skilled in the art may implement the embodiments. The present disclosure may be modified in various different ways, all without departing from the scope of the present disclosure.

Because sizes and thicknesses of constituent members shown in the drawings are given for better understanding and ease of description, the present disclosure is not limited to the illustrated sizes and thicknesses.

In the drawings, dimensions of various elements, layers, films, panels, regions, etc., may be exaggerated for clarity. In the drawings, for better understanding and ease of description, thicknesses of some layers and areas are exaggeratedly displayed. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

It will be understood that when an element such as a layer, film, region, area, or substrate is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. In addition, unless explicitly described to the contrary, the word "comprise", and variations such as "comprises" or "comprising," "includes," and/or "including," will be understood to imply the inclusion or presence of stated elements, features, integers, steps, operations, and/or components, but not the exclusion of any other elements, features, integers, steps, operations, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

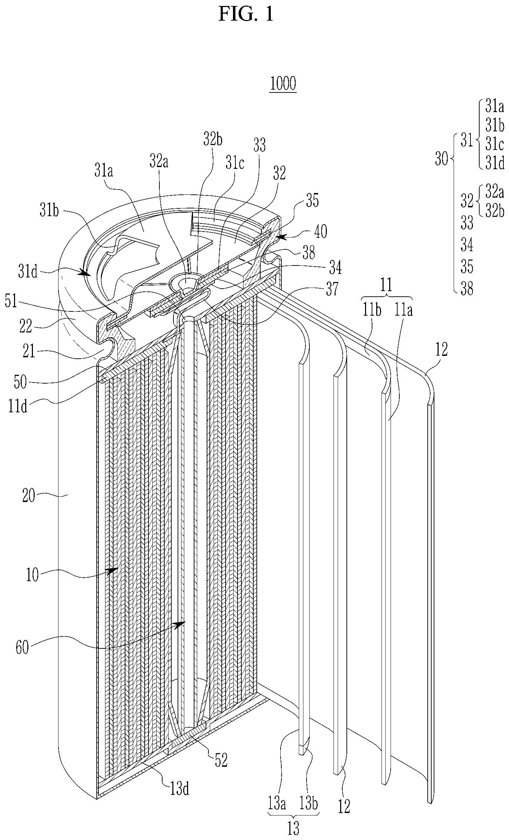

FIG. 1 is a cross-sectional view of a rechargeable battery according to embodiments of the present disclosure.

As illustrated in FIG. 1, the rechargeable battery 1000 according to embodiments of the present disclosure may include an electrode assembly 10, a case 20 including the electrode assembly 10, a cap assembly 30 coupled to an opening of the case 20 through a gasket and electrically connected to the electrode assembly 10, an insulator 50 provided between the cap assembly 30 and the electrode assembly 10, and a center pin 60 disposed or located at a center of the electrode assembly 10.

The electrode assembly 10 may include a first electrode 11, a separator 12, and a second electrode 13 that may be stacked (e.g., sequentially). The electrode assembly 10 may be a cylindrical jelly roll in which the first electrode 11, the separator 12, and the second electrode 13 are stacked and then wound around the center pin 60.

The first electrode 11 may include a first electrode active portion 11a where an active material layer (e.g., transition metal oxide (LiCoO₂, LiNiO₂, LiMn₂O₄, or the like) is formed on both surfaces of a conductive substrate (or a current collector) formed of a thin metal plate, and a first electrode uncoated portion 11b that is a region where a substrate is exposed because an active material layer is not formed and is formed at an edge along the electrode active portion 11a. An end portion of the active material layer may be covered with an insulating layer or the like, and the first electrode uncoated portion 11b may be a portion made of the substrate (e.g., a portion made of only the substrate) without any other layers such as an insulating layer as well as the active material layer.

The second electrode 13 may include a second electrode active region 13a in which an active material layer (e.g., graphite, carbon, or the like) is formed on both surfaces of a substrate formed of a thin metal plate, and a second electrode uncoated portion 13b that is a region where a substrate is exposed because an active material layer is not formed and is formed at an edge along the electrode active portion 13a. An end portion of the active material layer may be covered with an insulating layer or the like, and the second electrode uncoated portion 13b may be a portion made of the substrate (e.g., a portion made of only the substrate) without any other layers such as an insulating layer as well as the active material layer.

For example, the first electrode 11 may be a positive electrode, and the second electrode 13 may be a negative electrode.

In some embodiments, a substrate of the first electrode 11 may be aluminum (Al), and a substrate of the second electrode 13 may be copper (Cu), nickel (Ni), or an alloy of copper and nickel.

The separator 12 may be disposed or located between the first electrode 11 and the second electrode 13, and may be insulated between the first electrode 11 and the second electrode 13. The separator 12 may use polyethylene, polypropylene, polyvinylidene fluoride, or a multilayer film of two or more layers thereof, and may use a mixed multilayer film such as a polyethylene/polypropylene 2-layer separator, a polyethylene/polypropylene/polyethylene 3-layer separator, a polypropylene/polyethylene/polypropylene 3-layer separator, or the like.

In a jelly roll state, a first electrode current collector plate 11d may be connected to the first electrode uncoated portion 11b of the electrode assembly 10, and a second electrode current collector plate 13d may be connected to the second uncoated portion 13b of the electrode assembly 10.

The second electrode current collector plate 13d may be in contact with the case 20, but a width of the first electrode current collector plate 11d may be formed to be smaller than a width of the second electrode current collector plate 13d so that the first electrode current collector plate 11d is not in contact with the case 20.

The first electrode uncoated portion 11b of the first electrode 11 may be bent toward the center pin 60 that is a center of the electrode assembly 10, and adjacent first electrode uncoated portions 11b may be stacked overlapping each other to be electrically connected to each other. For example, embodiments of the present disclosure may be easily folded by forming an oblique cut portion.

The first electrode uncoated portion 11b may be electrically connected to the first electrode current collector plate 11d in an overlapping state.

The first electrode uncoated portion 11b may include one surface contacting and electrically connected to the first electrode current collector plate 11d and the other surface facing an end portion of the second electrode 13. The other surface of the first electrode uncoated portion 11b may be spaced apart from the end portion of the second electrode 13.

An insulating layer (not shown) may be formed on at least one of one surface and the other surface of the first electrode uncoated portion 11b.

A lead tab 37 may be electrically connected to the first electrode current collector plate 11d.

One end of the lead tab 37 may be connected to the first electrode current collector plate 11d by welding, and the other end of the lead tab 37 may be electrically connected to the cap assembly 30. The lead tab 37 may be bent so that one surface of the lead tab 37 faces the electrode assembly 10 in order to increase a contact area with the cap assembly 30.

The insulator 50 having an opening exposing the center pin 60 may be disposed or located on the first electrode current collector plate 11d.

The insulator 50 may be formed to be larger than the first electrode current collector plate 11d so that the insulator 50 contacts an inner surface of the case 20. If the insulator 50 is formed to be larger than the first electrode current collector plate 11d, a predetermined gap may be formed between the first electrode current collector plate 11d and the case 20 by a width at which the insulator 50 protrudes out of the first electrode current collector plate 11d. The gap between the first electrode current collector plate 11d and the case 20 may minimize or prevent a short circuit due to contact between the first electrode current collector plate 11d and the case 20.

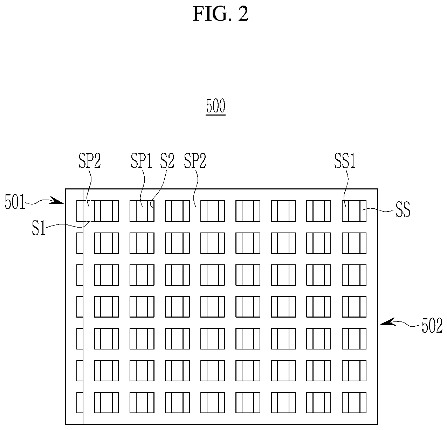

The insulator 50 may be formed of a plurality of layers, and will be described in detail with reference to FIGS. 2 to 4.

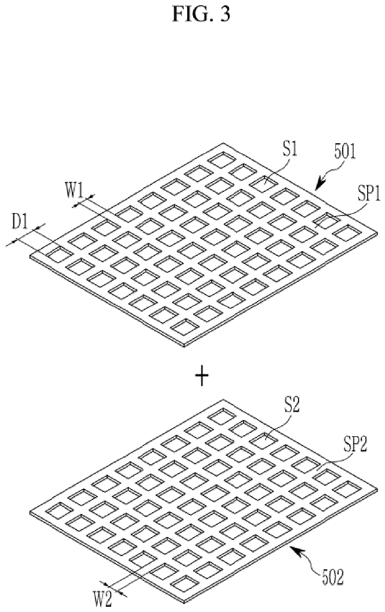

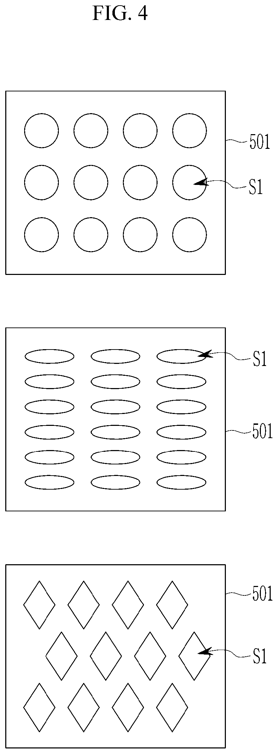

FIG. 2 is a schematic plan view of an insulator 500 according to embodiments of the present disclosure. The insulator 500 of FIG. 2 may be similar to the insulator 50 of FIG. 1. FIG. 3 is another view of the insulator of FIG. 2, and FIG. 4 is a plan view of a first insulator according to embodiments of the present disclosure.

As illustrated in FIG. 2 and FIG. 3, the insulator 500 according to embodiments of the present disclosure may include a first insulator 501 and a second insulator 502 overlapping the first insulator 501.

The first insulator 501 and/or the second insulator 502 may be any material that may be injected. For example, the first insulator 501 and/or the second insulator 502 may be polypropylene (PP) or polyethylene terephthalate (PET). A thickness of the first insulator 501 and/or the second insulator 502 may be 3 µm to 1,000 µm.

The first insulator 501 and the second insulator 502 may have a plate shape or a net shape, and a plurality of first through holes S1 and a plurality of second through holes S2 may be formed at the first insulator 501 and the second insulator 502. The first through holes S1 and the second through holes S2 may be disposed or arranged in a matrix format.

For convenience of description, if a width of a connection portion SP1 or SP2 between the through holes is greater than or equal to a diameter of the through hole, the net shape may be formed so that the width of the connection portion SP1 or SP2 between the through holes is narrower than the diameter of the through hole.

The first through hole S1 and the second through hole S2 may be randomly disposed or located. In some embodiments, the first through hole S1 and the second through hole S2 may be located at regular intervals and sizes. When a plurality of insulators are stacked to form a fine hole as will be described later, disposing the fine holes at regular intervals and sizes may form the fine hole with a predetermined size rather than disposing the fine holes in a random shape.

Although FIG. 2 and FIG. 3 illustrate the through hole S1 or S2 as having a quadrangular planar shape, the present disclosure is not limited thereto, and the through hole S1 may have various shapes such as a polygonal shape (e.g., a diamond shape), a circular shape, and an oval shape, as illustrated in the embodiment of FIG. 4. Because the first insulator 501 and the second insulator 502 may have the through hole with the same shape, only the first insulator is shown in FIG. 4.

Referring back to FIG. 2 and FIG. 3, an area (e.g., an entire area) of the various first through holes S1 and an area (e.g., an entire area) of the various second through holes S2 constitute or add up to be 40% to 90% of the areas of the first insulator 501 and the second insulator 502, and a diameter (or a width) D1 of one or more of the through holes S1 and S2 may be greater than a size of an impurity so that the impurity may pass through the holes S1 and S2. For example, the diameter D1 of one or more of the through holes S1 and S2 may be 100 µm or more.

The first through hole S1 may overlap the connection portion SP2 between adjacent second through holes S2, and the second through hole S2 may overlap the connection portion SP1 between adjacent first through holes S1. For example, a width W1 of the connection portion SP1 between the adjacent first through holes S1 may be smaller than a size of the second through hole S2 overlapping the connection portion SP1, and a width W2 of the connection portion SP2 between the adjacent second through holes S2 may be smaller than a size of the connection portion SP1 overlapping the second through hole S2 between the first through holes S1. If the width W1 or W2 is larger than a size of respectively the second through hole S2 or the first through hole S1, the through holes (e.g., all the through holes) may be blocked so that the fine hole may not be formed.

The above embodiment in which the first through hole S1 and the second through hole S2 are disposed or arranged to be misaligned with each other so that the first through hole S1 overlaps the connection portion SP2 between the adjacent second through holes S2 and the second through hole S2 overlaps the connection SP1 between the adjacent first through hole S1 is described as an example, but the present disclosure is not limited thereto.

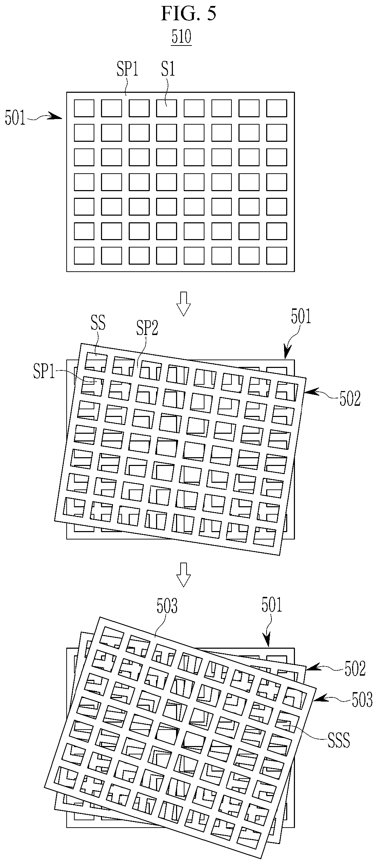

FIG. 5 a series of plan views of an insulator 510 as it undergoes a stacking process according to embodiments of the present disclosure.

As illustrated in FIG. 5, a plurality of insulators (e.g., identical insulators) may be stacked to form the insulator 510. At least one of the plurality of the insulators may be stacked in a state in which it is rotated at an angle (e.g., a predetermined angle) with respect to a virtual center line passing through a center of the lower insulator.

The insulator 510 may be formed by stacking a first insulator 501, a second insulator 502, and a third insulator 503. The first insulator 501, the second insulator 502, and the third insulator 503 may be insulators with the same size of through hole and the same disposition or arrangement of through holes.

The second insulator 502 may be stacked on the first insulator 501. The second insulator 502 may be rotated at an angle (e.g., a predetermined angle) with respect to a virtual center line of the first insulator 501 on which the second insulator 502 is stacked. The rotation may allow a connection portion SP2 between adjacent second through holes SS of the second insulator 502 to overlap a first through hole S1 of the first insulator 501, and a connection portion SP1 between adjacent first through holes S1 to overlap the second through hole SS.

For example, the connection portion SP2 between the adjacent second through holes SS may block a portion of the first through hole S1 so that a size of the first through hole S1 is reduced.

For example, the third insulator 503 may be stacked on the second insulator 502, and the third insulator 503 may be rotated at an angle (e.g., a predetermined angle) based on the second through hole SS of the second insulator 502 on which the third insulator 503 is stacked. The rotation may allow a connection portion SP3 between third through holes SSS of the third insulator 503 to overlap the second through hole SS.

For example, the connection portion SP3 between adjacent third through holes SSS may block a portion of the first through hole S1 or the second through hole SS, so that a size of the first through hole S1 or the second through hole SS is reduced.

The rotating of the stacked insulators as illustrated in FIG. 5 may allow various sizes of small holes (or fine holes) to be formed.

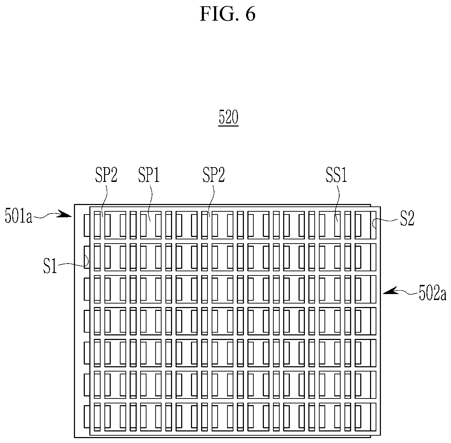

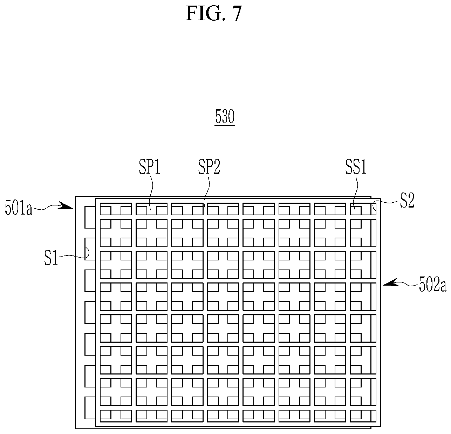

The sizes of the stacked through holes are the same in one or more embodiments. However, the present disclosure is not limited thereto, and the sizes of the stacked through holes may be different from each other as illustrated in FIG. 6 and FIG. 7.

FIG. 6 and FIG. 7 are plan views of insulators 520, 530 according to embodiments of the present disclosure.

If a size of a first through hole S1 of the insulator 520 or 530 is larger than a size of a second through hole S2 of the insulator 520 or 530 as illustrated in FIG. 6 and FIG. 7, a plurality of connection portions SP2 including a connection portion SP2 between adjacent second through holes S2 may overlap the first through hole S1. For example, three or more small holes SS1 may be formed by overlapping a first insulator 501a and a second insulator 502a.

Although the above embodiment describes that the first insulator and the second insulator overlap each other or the first insulator to the third insulator overlap each other, the present disclosure is not limited thereto, and fourth and fifth insulators may be additionally stacked on the first to third insulators. For example, a connection portion of the additionally stacked insulator may be disposed or arranged to overlap a small hole previously formed due to the stacking.

In some embodiments, the through hole may be divided into small holes with reduced sizes depending on the number of times that the connection portions of the insulators stacked in one through hole overlap or the number of the connection portions.

For example, if one connection portion is overlapped, the first through hole may be divided into two small holes, and if two connection portions are overlapped, the first through hole may be divided into three or four small holes as illustrated in FIG. 6 and FIG. 7.

As the insulator is additionally stacked, the small hole may be divided into smaller holes to become fine holes. In some embodiments, the small hole may become smaller so that a fine particle floating within an electrolyte does not pass. For example, the insulator may be additionally stacked until a fine hole having an identifier or a desired size is formed.

In some embodiments, the fine hole is formed by stacking a plurality of insulators with a plurality of through holes including a through hole that has a size larger than a size of an impurity, so that the fine hole has a size that helps minimize or prevent the impurity from passing through the fine hole. For example, the size of the through hole may be 100 µm or more, and may be larger than the size of the impurity. By stacking the plurality of insulators, a diameter (or a width) of the fine hole that may be formed may be less than 100 µm depending on the size of the impurity.

A benefit provided by the one or more embodiments of the present disclosure is that while an electrolyte is injected, the fine hole of the insulator may help minimize or prevent the impurity within the electrolyte from penetrating into the inside. In this regard, the impurity within the electrolyte may be filtered by the fine hole of the insulator or may not float by being caught in the fine hole.

Referring back to FIG. 1, the lead tab 37 may contact a first auxiliary plate 34 of the cap assembly 30 to be described later to be connected to the first auxiliary plate 34 of the electrode assembly 10 through an opening 51 of the insulator 50.

In some embodiments, the electrode assembly 10 is wound around the center pin 60, and the center pin 60 is disposed or located at a center of the electrode assembly 10, and may be disposed or located parallel to a direction in which the electrode assembly 10 is inserted into the case 20.

The center pin 60 may be deformed (e.g., minimally deformed) or may maintain a shape close to a pre-deformation shape if the center pin 60 receives a front compressive load or a local impact load acting on the outside of the rechargeable battery. The center pin 60 may have a hollow circular pipe shape. For example, the center pin 60 may serve as a movement path for a gas internally generated. In some embodiments, the center pin 60 may be omitted.

The center pin 60 may be formed of a material (for example, a metal having conductivity) having a certain rigidity in order to be deformed (e.g., minimally deformed) against an external impact. For example, the metal having conductivity may be steel, a steel alloy, aluminum, an aluminum alloy, or the like. In some embodiments, the center pin 60 has conductivity, and both ends of the center pin 60 may be installed to be electrically insulated from the first electrode current collector plate 11d and the second electrode current collector plate 13d.

In some embodiments, an insulating pad 52 may be disposed or located between a lower end of the center pin 60 and the second electrode current collector plate 13d corresponding to the lower end of the center pin 60. An upper end of the center pin 60 may pass through a through hole formed at a center of the first electrode current collector plate 11d in an insulated state to be supported by the insulator 50. For example, the upper end of the center pin 60 may be spaced apart from the through hole of the first electrode current collector plate 11d, or an insulating member (not shown) may be interposed between the upper end of the center pin 60 and the through hole of the first electrode current collector plate 11d. Therefore, a movement of the center pin 60 may be restricted in a length direction of the center pin 60, and the center pin 60 may maintain a stable state at a center of the electrode assembly 10.

One side of the case 20 may be open so that the electrode assembly 10 is inserted into the case 20 together with an electrolyte. The case 20 may be formed to have approximately the same shape as a jelly roll-shaped electrode assembly 10.

For example, the case 20 may include a circular bottom portion and a cylindrical side portion extending a predetermined length upward from the bottom portion. During an assembly process of the rechargeable battery, an upper portion of the cylindrical case may be opened. For example, during the assembly process of the rechargeable battery, the electrode assembly may be inserted into the cylindrical case, and then the electrolyte may be injected into the cylindrical case.

The electrolyte may allow a lithium ion generated by an electrochemical reaction in the first electrode and the second electrode inside the battery to move. The electrolyte may include a lithium salt such as LiPF₆ or LiBF₄ and an organic solvent such as EC, PC, DEC, EMC, or EMC. The electrolyte may be in a liquid, solid, or gel state.

The case 20 may be connected to the second electrode current collector plate 13d of the electrode assembly to function as a second electrode terminal of the rechargeable battery. For example, the case 20 may be formed of a conductive metal such as aluminum, aluminum alloy, or nickel-plated steel.

The cap assembly 30 may be disposed or located at an opening of the case 20, and may be coupled to the case 20 with the gasket 40 interposed between the cap assembly 30 and the case 20. The gasket 40 may insulate the case 20 and the cap assembly 30, and may seal the inside of the case 20 accommodating the electrode assembly 10 and the electrolyte.

The cap assembly 30 may include a cap plate 31, a positive temperature coefficient element 35, a vent plate 32, an insulating member 33, the first auxiliary plate 34, and a second auxiliary plate 38.

The first auxiliary plate 34 may be electrically connected to the lead tab 37 of the electrode assembly, and may be coupled to the lead tab 37 by welding.

The second auxiliary plate 38 may be stacked on the first auxiliary plate 34 to be electrically connected to the first auxiliary plate 34, and may be coupled to the first auxiliary plate 34 by welding. The second auxiliary plate 38 may be disposed or located at a center of the electrode assembly 10 corresponding to the center pin 60, and may have a through hole exposing the first auxiliary plate 34.

The vent plate 32 may be disposed or located above the second auxiliary plate 38 with the insulating member 33 interposed between the vent plate 32 and the second auxiliary plate 38. An edge of the vent plate 32 may be inserted into the gasket 40 to be coupled to the case 20.

The vent plate 32 may include a vent 32a disposed or located at a portion corresponding to the center pin 60. The vent 32a may protrude from the vent plate 32 toward the electrode assembly 10, and may contact the first auxiliary plate 34 through the through hole to be electrically connected to the first auxiliary plate 34. The vent plate 32 may have a notch 32b around the vent 32a that guides breakage of the vent 32a.

The vent 32a may be broken under a predetermined pressure condition to release an internal gas to the outside and block electrical connection with the first auxiliary plate 34. In some embodiments, when an internal pressure of the case 20 rises due to generation of a gas, the notch 32b may be broken in advance so that the gas is discharged to the outside through an exhaust port 31d to be described later, to help minimize or prevent explosion of the rechargeable battery.

For example, if an abnormal reaction continues so that the vent 32a is damaged, an electrical connection between the vent plate 32 and the first auxiliary plate 34 may be disconnected. In some other embodiments, an electrical connection between the cap plate 31 electrically connected to the vent plate 32 and the first auxiliary plate 34 may be disconnected so that no more current flows.

The cap plate 31 may include a center plate 31a corresponding to the center pin 60 that is a center of the electrode assembly 10, a plurality of branch portions 31b extending from the center plate 31a toward the gasket 40, and a coupling plate 31c that connects ends of the branch portions 31b and is inserted into the gasket 40 to be coupled to the gasket 40. A space between adjacent branch portions 31b may be opened to the outside to form the exhaust port 31d for emitting an internal gas.

The branch portion 31b may be bent from the coupling plate 31c to be connected to the center plate 31a so that a center of the cap plate 31 protrudes outside the case 20. The cap plate 31 may be electrically connected to the first electrode current collector plate 11d through the vent plate 32, the second auxiliary plate 38, the first auxiliary plate 34, and the lead tab 37 so that the cap plate 31 is used as a first electrode terminal of the rechargeable battery. For example, if a center of the cap plate 31 is formed to protrude outside the case 20, a terminal connection with an external device may be facilitated.

In some embodiments, the positive temperature coefficient element 35 may be formed along a second plate of the cap plate 31, and may be inserted into the gasket 40 in a stacked state between the second plate of the cap plate and an edge of the vent plate to be coupled to the gasket 40.

The positive temperature coefficient element 35 may be installed between the cap plate 31 and the vent plate 32 to regulate current flow between the cap plate 31 and the vent plate 32 according to an internal temperature of the rechargeable battery.

If the internal temperature is within a predetermined range, the positive temperature coefficient element 35 may act as a conductor to electrically connect the cap plate 31 and the vent plate 32. However, if the internal temperature exceeds a predetermined temperature, the positive temperature coefficient element 35 may have an electrical resistance that increases to infinity. For example, the positive temperature coefficient element 35 may block flow of a charging or discharging current between the cap plate 31 and the vent plate 32.

In a state where the electrode assembly 10 is inserted into the case 20, the vent plate 32, the positive temperature coefficient element 35, and the cap plate 31 may be inserted into the gasket 40 in a stacked state at an edge of the cap assembly 30, and then the cap assembly 30 may be inserted into an opening of the case 20.

For example, the cap assembly 30 may be fixed to the opening of the case 20 through a crimping process. In some embodiments, a beading portion 21 and a crimping portion 22 may be formed adjacent to the opening of the case 20. The beading portion 21 may be formed through a beading process. The beading portion 21 may have a structure in which the beading portion 21 is recessed toward a center in a radial direction of the case 20 at an upper side of the case 20 in a state in which the electrode assembly 10 is accommodated in the case 20, and the beading portion 21 may minimize or prevent the electrode assembly 10 from moving up and down.

The crimping portion 22 may have a structure that relatively protrudes from the beading portion 21 in a radial direction, and may be connected to the beading portion 21 so that the crimping portion 22 holds an outer circumferential surface of the cap assembly 30 and upper and lower surfaces connected to the outer circumferential surface with the gasket 40.

While this disclosure has been described in connection with what is presently considered to be practical embodiments, it is to be understood that the disclosure is not limited to the disclosed embodiments, but is intended to cover various modifications and equivalent arrangements included within the scope of the appended claims and their equivalent.

**Description of symbols**

| | | | |
|---|---|---|---|
| 10: | electrode assembly | 11: | first electrode |
| 12: | separator | 13: | second electrode |
| 20: | case | 21: | beading portion |
| 22: | clamping portion | 30: | cap assembly |
| 31: | cap plate | 31a: | center plate |
| 31b: | branch portion | 31c: | coupling plate |
| 31d: | exhaust port | 32: | vent plate |
| 31a: | vent | 32b: | notch |
| 33: | insulation member | 34: | first auxiliary plate |
| 35: | positive temperature element | 37: | lead tab |
| 38: | second auxiliary plate | 40: | gasket |
| 50: | insulator | 51: | opening |
| 52: | insulating pad | 60: | center pin |

## Claims

1. An insulator (50, 500, 510, 520) for a rechargeable battery (1000), comprising:
a first insulator (501, 501a) including a plurality of first through holes (S1); and
a second insulator (502, 502a) including a plurality of second through holes (S2),
wherein a connection portion (SP2) between a first one of the plurality of second through holes and an adjacent second one of the plurality of second through holes overlaps a corresponding one of the plurality of the first through holes (S2).

2. The insulator (50, 500, 510, 520) for the rechargeable battery (1000) as claimed in claim 1, wherein at least one of the first insulator (501, 501a) or the second insulator (502, 502a) has a plate shape.

3. The insulator (50, 500, 510, 520) for the rechargeable battery (1000) as claimed in claim 1 or 2, wherein the first insulator (501, 501a) has a plate shape and the second insulator (502, 502a) has a net shape.

4. The insulator (50, 500, 510, 520) for the rechargeable battery (1000) as claimed in any of the preceding claims, wherein at least one of the plurality of first through holes (S1) or the plurality of second through holes (S2) are arranged in a matrix format.

5. The insulator (50, 500, 510, 520) for the rechargeable battery (1000) as claimed in any of the preceding claims, wherein the plurality of first through holes (S1) has one of a circular shape, an oval shape, or a polygonal shape.

6. The insulator (50, 500, 510, 520) for the rechargeable battery (1000) as claimed in any of the preceding claims, wherein at least one of the first insulator (501, 501a) or the second insulator (502, 502a) includes polypropylene, PP, or polyethylene terephthalate, PET.

7. The insulator (50, 500, 510, 520) for the rechargeable battery (1000) as claimed in any of the preceding claims, wherein a diameter of the plurality of first through holes and a diameter of the plurality of second through holes is 100 µm or more.

8. The insulator (50, 500, 510, 520) for the rechargeable battery (1000) as claimed in claim 7, wherein an area of the plurality of first through holes is 40% to 90% of an area of the first insulator (501, 501a).

9. The insulator (50, 500, 510, 520) for the rechargeable battery (1000) as claimed in any of the preceding claims, wherein a thickness of at least one of the first insulator (501, 501a) and the second insulator (502, 502a) is 3 µm to 1,000 µm.

10. The insulator (50, 500, 510, 520) for the rechargeable battery (1000) as claimed in any of the preceding claims, wherein a connection portion (SP1) between a first one of the plurality of first through holes and an adjacent second one of the plurality of first through holes overlaps a corresponding one of the plurality of the second through holes (S2).

11. The insulator (50, 500, 510, 520) for the rechargeable battery (1000) as claimed in claim 10, wherein a width (W1) of the connection portion (SP1) between a first one of the plurality of first through holes and an adjacent second one of the plurality of first through holes is smaller than a size of the second through hole S2 overlapping the connection portion (SP1), and a width (W2) of the connection portion (SP2) between a first one of the plurality of second through holes and an adjacent second one of the plurality of second through holes is smaller than a size of the connection portion (SP1) overlapping the second through hole (S2) between the first through holes S1.

12. A rechargeable battery (1000) comprising:
the insulator (50, 500, 510, 520) of any one of claims 1 to 11;
an electrode assembly (10) arranged to overlap the insulator (50, 500, 510, 520);
a case (20) that accommodates the insulator (50, 500, 510, 520) and the electrode assembly (10) together with an electrolyte; and
a cap plate (31) configured to seal the case (20).
